(19) Europäisches Patentamt
European Patent Office
Office européen des brevets

(11) **EP 3 198 692 B1**

## (12) EUROPÄISCHE PATENTSCHRIFT

(45) Veröffentlichungstag und Bekanntmachung des Hinweises auf die Patenterteilung:
**30.10.2019 Patentblatt 2019/44**

(21) Anmeldenummer: **15775103.3**

(22) Anmeldetag: **10.09.2015**

(51) Int Cl.:
*H01T 1/14* (2006.01)       *H01C 7/12* (2006.01)
*H01T 4/04* (2006.01)       *H01T 1/16* (2006.01)

(86) Internationale Anmeldenummer:
**PCT/EP2015/070717**

(87) Internationale Veröffentlichungsnummer:
**WO 2016/045982 (31.03.2016 Gazette 2016/13)**

(54) **ÜBERSPANNUNGSSCHUTZANORDNUNG MIT KURZSCHLIESSEREINRICHTUNG**

OVERVOLTAGE PROTECTION ASSEMBLY HAVING A SHORT-CIRCUITING DEVICE

SYSTÈME DE PROTECTION CONTRE LES SURTENSIONS MUNI D'UN DISPOSITIF DE MISE EN COURT-CIRCUIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2014 DE 102014014483**
**14.11.2014 DE 102014016938**

(43) Veröffentlichungstag der Anmeldung:
**02.08.2017 Patentblatt 2017/31**

(73) Patentinhaber: **DEHN SE + Co KG**
**92318 Neumarkt / Opf. (DE)**

(72) Erfinder:
• EHRHARDT, Arnd
92318 Neumarkt (DE)
• FROMM, Michael
92280 Kastl (DE)

(74) Vertreter: **Kruspig, Volkmar**
**Meissner Bolte Patentanwälte**
**Rechtsanwälte Partnerschaft mbB**
**Postfach 86 06 24**
**81633 München (DE)**

(56) Entgegenhaltungen:
DE-A1-102005 048 003     DE-B3- 10 313 045
DE-U1-202013 002 222

**Beschreibung**

Die Erfindung betrifft eine Überspannungsschutzanordnung mit Kurzschließereinrichtung, diese umfassend zwei gegenüberliegende Kontaktelektroden, die unter mechanischer Vorspannung stehend im Kurzschlussfall federkraftunterstützt eine Relativbewegung zueinander ausführen, wobei ein Opferelement als Abstandshalter zwischen den Kontaktelektroden vorgesehen ist, welches thermisch- und/oder stromflussbedingt die Relativbewegung der Kontaktelektroden freigibt, einem metallischen Gehäuse, welches die Kontaktelektroden und das Opferelement aufnimmt, sowie am Gehäuse befindlichen oder durch das Gehäuse geführten Anschlüssen, gemäß Oberbegriff des Patentanspruchs 1.

Aus der DE 10 2005 048 003 B4 ist eine Kurzschließeinrichtung für den Einsatz in Nieder- und Mittelspannungsanlagen zum Sach- und Personenschutz vorbekannt. Diese Kurzschließeinrichtung umfasst ein Schaltelement, welches vom Auslösesignal einer Fehlererfassungseinrichtung betätigbar ist. Weiterhin sind zwei sich gegenüberliegende Kontaktelektroden mit Mitteln zur Stromzuführung vorhanden, wobei diese an einen Stromkreis mit Anschlüssen von unterschiedlichem Potential kontaktierbar sind.

Die Kontaktelektroden stehen unter mechanischer Vorspannung und können im Kurzschlussfall federkraftunterstützt eine Relativbewegung zueinander ausführen.

Weiterhin umfasst die bekannte Kurzschließeinrichtung ein Opferelement als Abstandshalter zwischen den Kontaktelektroden sowie eine elektrische Verbindung zwischen dem Opferelement und dem Schaltelement einerseits und einer der Kontaktelektroden andererseits, um eine stromflussbedingte thermische Zerstörung des Opferelements gezielt herbeizuführen.

Das dortige Opferelement ist als dünnwandiger Hohlzylinder mit einem Verhältnis zwischen Durchmesser und Wandstärke des Hohlzylinders >10:1 aus einem hochschmelzenden metallischen Material ausgeführt.

Die US 3,813,577 zeigt einen Kurzschließer für einen Gasableiter mit Fail-Safe-Funktion. Die dortige Anordnung spricht ausschließlich auf Überspannungen an. Der Kurzschließer ist wegen der geringen Leistungsfähigkeit nicht für einen Einsatzzweck geeignet, bei dem es auf einen sehr schnell zu erzielenden Kurzschluss ankommt. Die Wirkung des dortigen Kurzschließers tritt nämlich unter Beachtung eines notwendigen Lotrings zu langsam ein.

Die DE 1 018 953 B zeigt eine Auslösevorrichtung für einen Kurzschließer, die mit einer geringstmöglichen Verzögerung ihre volle Ablaufgeschwindigkeit erlangen soll, wobei ein Kraft- oder Energiespeicher zum Einsatz kommt. Bei einer dortigen Ausführungsform ist eine Kurzschlussplatte vorhanden, welche auf zwei Kontakte abgesenkt wird. Das diesbezüglich vorbekannte Opferelement besteht aus einem nichtleitenden Material. Ein Stromfluss ist erst nach Kontaktgabe und dem Erreichen der Endpositionen möglich, was zu langen Reaktionszeiten führt.

Bei der Überspannungsschutzeinrichtung mit einer Varistorscheibe als Überspannungsableiter nach EP 1 116 246 B1 ist eine metallisches, im Wesentlichen zylindrisches Gehäuse vorhanden, das einen Hohlraum bildet. Ein scheibenförmiger Varistor mit gegenüberliegenden Scheibenoberflächen wird innerhalb des Gehäusehohlraums positioniert. Das Gehäuse weist eine erste im Wesentlichen ebene elektrische Kontaktfläche und eine Metallseitenwand sowie eine Öffnung auf. Anschlusselektroden stehen mit der Varistorscheibe in Kontakt. Darüber hinaus sind mechanische Vorspannelemente in Form von Scheibenfedern vorhanden, um eine feste Kontaktierung der Varistorscheibe am Gehäuseboden bzw. der entsprechenden Kontaktplatte zu bewirken. Boden und Deckel des zylindrischen Gehäuses sind als Schraubeinsatz ausgeführt, wobei diesbezüglich die Innenwandung des Gehäuses mindestens abschnittsweise mit einem entsprechenden komplementären Gewinde versehen ist. Durch das feste Aneinanderpressen der funktionswesentlichen Bestandteile soll einerseits ein guter elektrischer Kontakt zur Varistorscheibe sowie andererseits eine ausreichende Wärmeabfuhr bei thermischer Belastung des Überspannungsableiters realisiert werden.

Die EP 1 798 742 B1 ist von der Grundkonzeption her mit der Lehre nach EP 1 116 246 B1 vergleichbar, wobei jedoch die Möglichkeit des Erzielens eines Kurzschlusses bezogen auf den im Gehäuse befindlichen schalenförmigen Varistor vorgesehen ist. Diesbezüglich ist ein bei Erwärmung schmelzendes Lot vorhanden, welches die relevanten Kontaktflächen überbrückt und den gewünschten Kurzschluss herbeiführt. Dieses unmittelbare Herbeiführen eines Kurzschlusses durch schmelzendes Lot sichert aufgrund der Zeitabhängigkeit der Kurzschlussausbildung keine Lichtbogenfreiheit und stellt sich in der Praxis als zu träge dar.

Neue Anwendungsgebiete im Bereich des Überspannungsschutzes erfordern immer häufiger robuste Überspannungsableiter mit einer Möglichkeit zum direkten Anschluss an Kabel bzw. Sammelschienen. Diese Überspannungsableiter sollen neben einer ausreichenden mechanischen Robustheit auch eigensicher bei Überlastung sein und möglichst direkt und ohne weitere Maßnahmen einen Einsatz bei harten Umweltbedingungen ermöglichen. Weiterhin fordert die Praxis Überspannungsableiter, die im Fehlerfall einen Kurzschlussstrom sicher führen und schnell und sicher sowie unverzögert Überstromschutzeinrichtungen hoher Nennstromstärke auslösen können.

Aus dem Vorgenannten ist es daher Aufgabe der Erfindung, eine weiterentwickelte Überspannungsschutzanordnung mit Kurzschließereinrichtung anzugeben, welche den genannten Anforderungen der Praxis genügt und die bei einfacher und kostengünstiger Bauform und gegebenen Anschlussbedingungen die Umsetzung verschiedener Ableiterkonzeptionen ohne grundlegende konstruktive Änderungen erlaubt.

Es wird demnach von einer Überspannungsschutzanordnung mit Kurzschließereinrichtung ausgegangen, wobei die eingesetzte Kurzschließereinrichtung zwei gegenüberliegende Kontaktelektroden aufweist, die unter mechanischer Vorspannung stehend im Kurzschlussfall federkraftunterstützt eine Relativbewegung zueinander ausführen. Darüber hinaus ist ein Opferelement als Abstandshalter zwischen den Kontaktelektroden vorgesehen, welches thermisch- und/oder stromfiussbedingt die Relativbewegung der Kontaktelektroden freigibt. Die Überspannungsschutzanordnung besteht darüber hinaus aus einem metallischen Gehäuse, welches die vorerwähnten Kontaktelektroden und das Opferelement aufnimmt, sowie im Gehäuse befindlichen oder durch das Gehäuse geführten Anschlüssen. Hierbei kann auch ein Teil des Gehäuses selbst ein Anschlusselement sein, z.B. in Form eines Anschlussbolzens oder einer Anschlussbohrung. Erfindungsgemäß ist das Gehäuse mindestens zweiteilig unter Bildung mindestens einer ersten und einer zweiten Kammer ausgebildet.

In der ersten Kammer ist die bewegliche, federkraftunterstützte Kontaktelektrode angeordnet. Weiterhin ist eine Trennwand zwischen erster und zweiter Kammer vorhanden, wobei die Trennwand unmittelbar die feste Kontaktelektrode bildet.

In der zweiten Kammer ist mindestens ein Überspannungsableiter angeordnet, der in seiner zur Trennwand gerichteten Seite eine Kontaktplatte aufweist, wobei sich das Opferelement, bevorzugt ausgebildet als dünnwandiger Hohlzylinder, zwischen dieser Kontaktplatte und der beweglichen Kontaktelektrode befindet. Diesbezüglich weist die Trennwand einen an die Abmessungen des Opferelements angepassten Durchbruch auf.

Ausgehend von diesem erfindungsgemäßen Konzept, weist die erste Kammer eine isolierte Durchführung für die elektrische Kontaktierung der aktiven Bauteile auf. In der ersten Kammer befindet sich darüber hinaus die mindestens eine Feder zur Betätigung der beweglichen Kontaktelektrode, nachfolgend auch als Kurzschließerplatte bezeichnet. Die feste Kontaktelektrode oder feste Kurzschließerplatte trennt bis auf die Durchführung für das Opferelement den Raum zwischen erster und zweiter Kammer ab.

Der in der zweiten Kammer befindliche Überspannungsableiter kann als Reihenschaltung von mehreren Varistoren oder als Sandwichanordnung im Sinne einer Reihenschaltung von Varistoren und Wärmesenken ausgeführt werden.

Der in der zweiten Kammer als Überspannungsableiter eingesetzte Varistor oder die Reihenschaltung mehrerer Varistoren kann auch als Reihenschaltung mit einem Gasentladungsableiter ausgebildet werden.

Bei einer ergänzenden erfindungsgemäßen Variante kann die erste Kammer noch eine Sicherung zum Erhalt der gewünschten Eigensicherheit durch eine interne Abschaltung umfassen.

Das erfindungsgemäße Gehäuse ist bevorzugt rotationssymmetrisch, insbesondere zylindrisch, wiederum insbesondere hohlzylindrisch ausgebildet.

Der Kraftvektor der Feder der beweglichen Kontaktelektrode wirkt über das Opferelement und die Kontaktplatte auf den oder die Überspannungsableiter ein und presst diesen bzw. diese an den diesbezüglichen Boden der zweiten Kammer des Gehäuses an.

Im Gegensatz zum Stand der Technik sind keine zusätzlichen mechanischen Anpressmittel zur thermischen und elektrischen Kontaktierung des Überspannungsableiters, insbesondere von scheibenförmigen Varistoren notwendig.

Die Kontaktplatte des Überspannungsableiters kann in bevorzugter Weise eine Wärmesenke bilden und diesbezüglich kompakt und voluminös ausgebildet sein. Die Kontaktplatte ist in einem definierten Abstand zur Unterseite der Trennwand befindlich, so dass hierdurch eine integrierte Funkenstrecke realisierbar ist.

Ergänzend kann zwischen der Kontaktplatte des Überspannungsableiters und der Trennwand ein Hilfskurzschließer vorgesehen sein.

Dieser Hilfskurzschließer kann z.B. als Bimetallschalter, Formgedächtnis-Metallschalter oder ein mit Lot fixierter thermisch aktivierbarer Schalter oder in ähnlicher Weise ausgeführt werden.

Bei einer Weiterbildung der Erfindung stützt sich das Opferelement mittelbar über eine thermosensible Halterung auf der Kontaktplatte ab, wobei bei entsprechender thermischer Belastung der Halterung diese nachgibt und hierdurch der Kurzschlusspfad auslösbar ist, so dass ein Durchlegieren des Überspannungsableiters mit allen hierdurch verbundenen Folgen und Risiken vermieden werden kann.

Darüber hinaus besteht die Möglichkeit, Mittel zur gezielten Führung eines im Durchlegierungsfall des Überspannungsableiters womöglich auftretenden Lichtbogens zur Funkenstrecke hin vorzusehen. Dies kann beispielsweise durch Kanäle und Aussparungen zur Vorgabe eines definierten Lichtbogen-Bewegungswegs erfolgen.

Die Erfindung soll nachstehend anhand von Ausführungsbeispielen sowie unter Zuhilfenahme von Figuren näher erläutert werden.

Hierbei zeigen:

Fig. 1     eine Längsschnittdarstellung durch eine vereinfachte Ausführungsform der erfindungsgemäßen Überspannungsschutzanordnung;

Fig. 2     Schaltbilder verschiedener Möglichkeiten der Ausbildung der Überspannungsschutzanordnung einerseits mit Kurzschluss eines eingesetzten Varistors, der Möglichkeit des Kurzschließens einer Reihenschaltung eines Gasableiters und eines Varistors sowie die Ausbildung einer Überspannungsschutzanordnung mit der Möglichkeit, den Überspannungsableiter kurzzuschließen, und einer integrierten Vorsicherung;

Fig. 3    eine detailliertere Längsschnittdarstellung einer Ausführungsform der Überspannungsschutzanordnung mit einem Zweikammergehäuse und einer Reihenschaltung eines Gasentladungsableiters und einen Varistors als wirksamen Überspannungsableiter;

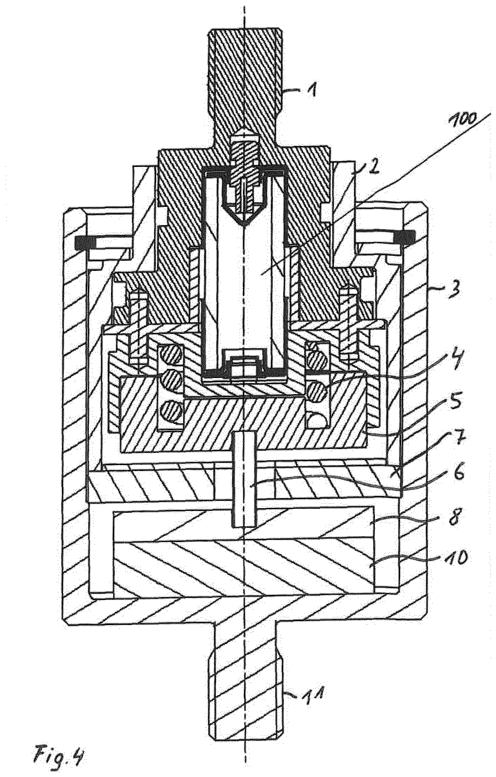

Fig. 4    eine Längsschnittdarstellung einer weiteren Ausführungsform einer Überspannungsschutzanordnung mit Kurzschließer, Überspannungsableiter und einer integrierten Vorsicherung und

Fig. 5    ein vereinfachtes Ersatzschaltbild für die erfindungsgemäße Anordnung und eintretender Zwangsverlagerung des Lichtbogens hin zu konstruktiv vorgesehenen Funkenstrecken.

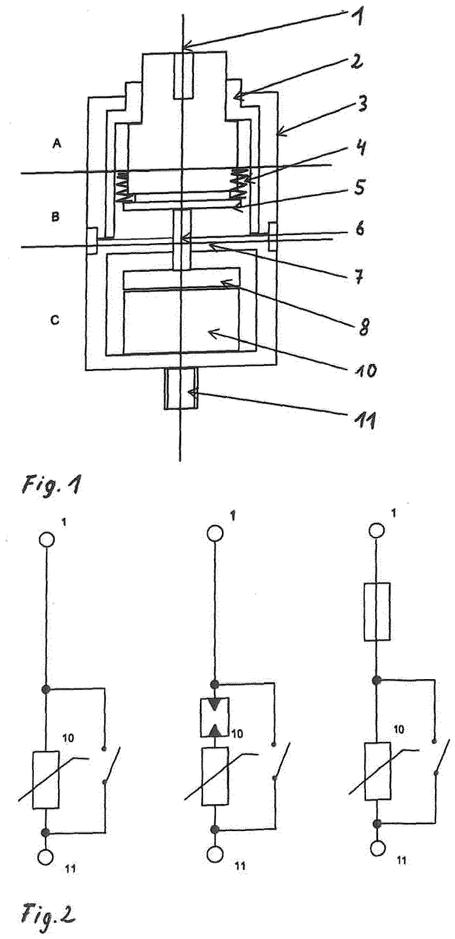

Der grundsätzliche Aufbau der erfindungsgemäßen Überspannungsschutzanordnung ist anhand der Fig. 1 in vereinfachter Längsschnittdarstellung nachvollziehbar.

Ein erster elektrischer Anschluss 1 ist über einen Isolationseinsatz 2 im Gehäuse 3 fixiert.

Der erste Anschluss 1 weist z.B. eine Sacklochbohrung zum Anschluss der Überspannungsschutzanordnung an einer Sammelschiene auf.

Das Gehäuse 3 kann z.B. zweiteilig mit mittiger Verschraubung ausgebildet werden.

Eine Feder 4 für die Kurzschließereinrichtung erzeugt eine Vorspannung auf eine bewegliche Kontaktelektrode 5, die als bewegliche Kurzschließerplatte wirkt.

Der Bereich A und B bildet eine erste Gehäusekammer.

Der Bereich C bildet eine zweite Gehäusekammer. Die Trennwand zwischen erster und zweiter Gehäusekammer ist als feste Kurzschließerplatte bzw. feste Kontaktelektrode 7 ausgebildet.

Die als Trennwand bzw. als feste Kurzschließerplatte fungierende feste Kontaktelektrode 7 weist einen Durchbruch auf. Durch diesen, gegebenenfalls isolierten Durchbruch ist ein Opferelement 6 geführt, das sich zwischen der beweglichen Kurzschließerplatte 5 und einer Kontaktplatte 8 abstützt. Alternativ kann das Opferelement 6 mit einer mantelseitigen Isolationsumhüllung versehen sein.

Die Kontaktplatte 8 steht in elektrischem Kontakt zu einer entsprechenden Oberfläche eines Varistors 10. Die Unterseite des Varistors 10 steht mit dem Boden des Gehäuses 3 in elektrischer und mechanischer Verbindung. Am Bodenbereich des Gehäuses 3 ist ein zweiter Außenanschluss 11 z.B. in Form eines Gewindebolzens vorgesehen.

In dem Fall, dass der durch das Opferelement 6 fließende Strom so groß wird, dass das Opferelement seine mechanische Stabilität verliert, wird die bewegliche Kurzschließerplatte 5 freigegeben und gelangt in Kontakt mit der Kammertrennwand respektive der festen Kontaktelektrode 7. Hierdurch entsteht eine unmittelbare elektrische Verbindung zwischen dem ersten Anschluss 1 und dem zweiten Anschluss 11 der Überspannungsschutzanordnung.

Es ist diesbezüglich, wie in der Fig. 2 (linke Abbildung) gezeigt, der Varistor 10 kurzschließbar.

Innerhalb der zweiten Kammer C kann aber auch eine Reihenschaltung aus Gasableiter und Varistor (siehe Fig. 2 Mitte) vorgesehen sein.

Ebenso besteht die Möglichkeit, eine integrierte Vorsicherung auszubilden, die sich bevorzugt im Bereich der ersten Kammer A B befindet (siehe Fig. 2, rechte Abbildung).

Das Gehäuse 3 besteht bevorzugt aus einem stabilen Metallmaterial und erfüllt alle Anforderungen für einen direkten Anschluss im Außenbereich mit hohen Anschlussdrehmomenten, z.B. wenn es darum geht, die Überspannungsschutzanordnung mit massiven Kabelenden oder Sammelschienen zu kontaktieren. Die Kammern oder Bereiche A; B; C innerhalb des Gehäuses 3 sind funktional bzw. räumlich getrennt und bevorzugt in Sandwichbauweise gestapelt.

Im Bereich C befinden sich die aktiven Überspannungsschutzkomponenten. In der ersten Kammer, und zwar dort im Bereich B, ist die eigentliche Kurzschlussvorrichtung vorgesehen, welche einen metallischen Kurzschluss herstellen kann, um die aktiven Überspannungsschutzkomponenten im Bereich C zu brücken.

Sowohl die Kurzschließereinrichtung als auch die Überspannungsschutzkomponenten bilden eine einfache Stapelanordnung und stehen unter einer gemeinsamen Vorspannung unter Rückgriff auf die Kraftvektoren ausgehend von der Feder 4. Die Federvorspannung fixiert gleichzeitig die genannten Teile und betätigt den Kurzschließer, d.h. die bewegliche Kurzschließerplatte 5. Dadurch, dass der Bereich mit den Überspannungsschutzkomponenten weitestgehend vom Kurzschließerbereich geometrisch getrennt ist, können im Falle der Überlastung der Überspannungsschutzkomponenten Folgeerscheinungen auf den unteren Bereich, d.h. die zweite Kammer beschränkt werden.

Den genannten Bereichen kann insbesondere bei gewünschter interner Abschaltung ein weiterer Bereich oder eine weitere Kammer mit einem Abschaltelement, beispielsweise der erwähnten Sicherung innerhalb des Gehäuse, beispielsweise im Raum, der den Durchführungskontakt aufnimmt, folgen.

Wenn die bewegliche Kurzschließerplatte 5 und der feste Teil des ersten Anschlusses 1, der sich in der ersten Kammer befindet, nicht als geschlossener Gleitkontakt ausgeführt wird, kann bei einer durchgeführten Kurzschlussbewegung der Kontakt zum ersten Anschluss auch vollständig aufgehoben werden, wodurch eine Unterbrechung vorliegt. Diese Abtrennung kann auch mit einem Kommutierungszweig zur Stromunterbrechung kombiniert werden.

Durch Dimensionierung der zweiten Kammer besteht die Möglichkeit, ganz unterschiedlich starke Scheibenvaristoren als Überspannungsableiter einzusetzen. Ebenso kann eine unterschiedliche Anzahl von Scheibenvaristoren in Reihe in ein entsprechend baugleiches Gehäuse 3 eingebracht werden.

Diesbezüglich ist lediglich die Stärke einer Komponente der Druckkette, beispielsweise der Kontaktplatte 8, anzupassen.

Ebenso besteht die Möglichkeit, einen Gasentladungsableiter in die Kontaktplatte 8 einzubetten.

Durch eine einfache Gestaltung z.B. des ersten Anschlussteils 1 mit oder ohne Vorsicherung, die auch als Dummy ausgebildet sein kann, ist die Überspannungsschutzanordnung als kurzschließender Ableiter mit sehr hoher Kurzschluss- und Dauerstromtragfähigkeit, aber auch als eigensicheres, abtrennendes Überspannungsschutzelement ausführbar.

Beim Einsatz von scheibenförmigen Varistoren 10 erfolgt eine Kühlung dieser durch die Scheibenstirnseiten, wobei als Wärmesenke das Gehäuse 3 genutzt werden kann.

Dadurch, dass sich die metallischen Kurzschließerkontakte bevorzugt in der ersten Kammer befinden, die von der zweiten Kammer, welche den Varistor aufnimmt, getrennt ist, besteht nicht die Gefahr, dass bei Überlast des Varistors metallische Kontakte des Kurzschließer beschädigt oder durch einen Lichtbogen vor dem Schließen vorgeschädigt werden können.

Falls gewünscht, kann eine Anzeige und Fernmeldung bezogen auf den Zustand der Überspannungsschutzanordnung auf einer Bewegung des Kurzschließers basieren bzw. ausgelöst werden.

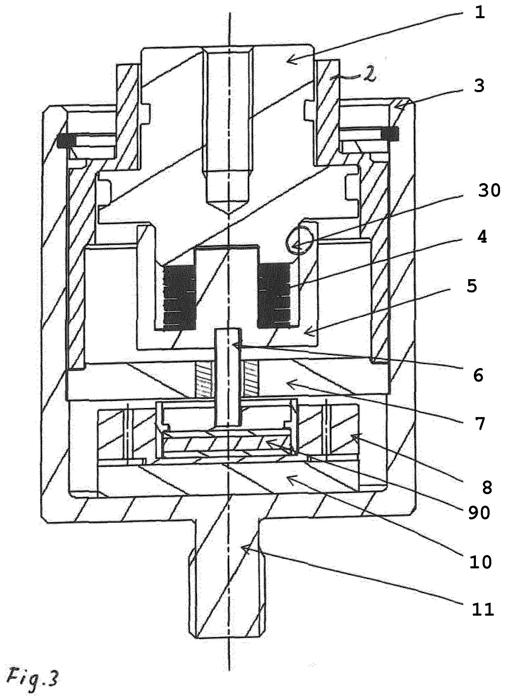

Die Längsschnittdarstellung nach Fig. 3 zeigt die Überspannungsschutzanordnung mit innerhalb eines Freiraums der Kontaktplatte 8 integriertem Gasentladungsableiter 90. Der im Bereich des Kurzschließers sich ausbildende koaxiale, stromführende Gleitkontakt ist mit dem Bezugszeichen 30 in der Fig. 3 gekennzeichnet.

Bei Normalfunktion erfolgt die Ableitung einer transienten Störgröße über die induktivitätsarme Reihenschaltung Opferelement 6 und Varistor 10 und gegebenenfalls Gasentladungsableiter 90 zwischen den Anschlüssen 1 und 11.

Die gemeinsame Feder 4 übt über die bewegliche Kurzschließerplatte 5, das Opferelement 6 und die Kontaktplatte 8 bzw. gegebenenfalls eine Zwischenplatte nebst Gasentladungsableiter 90 eine Kontaktkraft auf den Varistor 10 aus, wodurch eine Funkenbildung bzw. ein Abheben von Varistor und Wärmesenke vom Gehäuseboden vermeidbar ist.

Infolge der Strombelastung des Opferelements 6 verliert dieses an mechanischer Festigkeit und wird durch die Kraft der Feder 4 deformiert.

Infolge der Längenverkürzungen dieses als Abstandshalter oder Stützelement wirkenden Opferelements 6 wird die Distanz zwischen den sich gegenüberstehenden Kontaktplatten des Kurzschließers überwunden und ein metallischer Kurzschluss zwischen den Teilen 5 und 7 und damit den Anschlüssen 1 und 11 erzeugt.

Aufgrund der orientierten mechanischen Stabilität des Opferelements durch seine langgestreckte Form in Richtung der Symmetrieachse der Überspannungsschutzanordnung kann auch eine seitlich einwirkende Kraft auf die Fixierung des Opferelements 6 bzw. direkt auf das Opferelement 6 zur Aufhebung der Stütz- und Abstandshalterfunktion gezielt genutzt werden.

Die eingesetzten Varistoren besitzen eine maximal zulässige Impulsstromtragfähigkeit, welche ohne Beschädigung des Bauteils abgeführt werden kann. Die Höhe der zulässigen Amplitude ist hierbei von der Wellenform des Stroms, z.B. 8/20 $\mu$s oder 10/350 $\mu$s abhängig. Bei einem üblichen Varistor kann der Wert bei 40 kA 8/20 $\mu$s und bei 1,5 kA 10/350 $\mu$s liegen.

Das Opferelement 6, welches die Kurzschließerfunktion auslöst, wird so gewählt, dass dessen maximale Belastungsfestigkeit jeweils nur minimal oberhalb der vorgenannten Werte liegt. Diese Auslegung des Opferelements sichert die definierte Betätigung des metallischen Kurzschließers. Es ist hierbei bedeutungslos, inwieweit eine reale Schädigung des Varistors auftritt oder nicht. Bei minimalen Überlasten erfolgt kein Durch- oder Überschlag des Varistors, bevor die Deformation des Opferelements infolge der Erwärmung und der Federkraft zu einem Kurzschluss geführt haben.

Bei sehr hohen oder steilen Impulsen kann es zum Überschlag oder Durchschlag des Varistors kommen, bevor die Kontakte des Kurzschließers den Varistor metallisch brücken. In diesem Fall besitzt die erfindungsgemäße Lösung einen weiteren Vorteil. Der Überschlag des Varistors wird durch entsprechende Auslegung der internen Funkenstrecken so gewählt, dass eine Überbrückung des Opferelements durch einen Überlaststrom nicht möglich ist. Hierzu wird der Abstand von der Wandung des Gehäuses 3 und die Varistordicke des Varistors 10 so festgelegt, dass bevorzugt ein Überschlag von der als Wärmesenke fungierenden Kontaktplatte 8 zur Gehäusewand erfolgt.

Der Abstand der Kontaktplatte 8 zur festen Kontaktelektrode bzw. zum festen Kurzschließerkontakt 7 wird geringer als der Abstand zwischen der bewegten Kontaktplatte 5 und der festen Kontaktelektrode 7 ausgelegt. Vorstehendes gewährleistet, dass es sowohl bei einer räumlichen Anhebung der Wärmesenke 8 als auch bei einer Lichtbogenbildung und der damit verbundenen Plasmaentstehung zum Ansprechen der Funkenstrecke zwischen der Wärmesenke 8 und der Unterseite der festen Kontaktelektrode 7 kommt. Hierdurch ist neben der zwangsweisen Strombelastung des Opferelements auch der Kontaktbereich, d.h. die Oberseite der festen Kontaktelektrode 7 und die Unterseite der beweglichen Kontaktelektrode 5 des Kurzschließers vor Verschmutzungen geschützt. Dies kann neben der geschützten Durchführung des Opferelements 6 durch die feste Kurzschlussplatte 7 auch noch mit zusätzlichen, nicht dargestellten Abdeckungen unterstützt werden. Auf jeden Fall bleibt die auftretende Lichtbogenbildung auf den Raum zwischen Varistor, Gehäuseboden und fester Kontaktelektrode 7, d.h. auf die zweite Kammer begrenzt.

Der realisierte metallische Kurzschluss ist in der Lage, hohe Kurzschlussströme von mehreren 10 kA bis zur Auslösung externer Überstromschutzorgane zu führen. Ebenso können Dauerströme von mehreren 100 A getragen werden.

Bei sehr hohen transienten Überspannungsbelastungen kann der Varistor 10 infolge der netzfrequenten Spannung ohne Impulsbelastung bereits überlastet werden. Hierbei kommt es u.U. zu einem Durchlegieren des Varistors 10. Dabei entsteht ein Lichtbogenkanal durch den Varistorkörper. Der damit verbundene Lichtbogen besitzt aufgrund der Einengung häufig eine sehr hohe Bogenspannung von deutlich über 100 V, welche einerseits den Folgestrom begrenzt, andererseits aber zu einem erheblichen Materialabbrand führen kann. Dieser Materialabbrand bedingt u.a. höhere Anforderungen an das Gehäusematerial. Zudem wird durch die Strombegrenzung die Auslösezeit des Kurzschließers erhöht.

Um die vorgenannten unerwünschten Effekte zu reduzieren, werden die nachstehend erläuterten Maßnahmen vorgeschlagen.

Für geringe Überlastfälle mit langsamer Erwärmung des Varistors 10 wird ein Hilfskurzschließer zwischen der Wärmesenke 8 und der unterer Kurzschließerplatte 7 integriert. Hierbei wird also die bestehende Funkenstrecke durch einen metallischen Kontakt gebrückt. Die Stromtragfähigkeit dieses Kontaktes kann gleich oder kleiner als die des Opferelements 6 ausgeführt werden. Der Hilfskontakt kann z.B. als Bimetallkontakt, als Schnappbimetall, als Schalter auf der Basis einer Formgedächtnis-Legierung oder auch als federvorgespannter und mit Lot fixierter Kontakt analog thermischer Abtrennvorrichtungen realisiert werden.

Für hohe Überlasten, bei denen eine sichere thermische Aktivierung vor dem Durchlegieren sehr aufwendig ist, wird vorgeschlagen, den Lichtbogen aus dem Durchlegierungsbereich in den Funkenstreckenbereich, bevorzugt zwischen Wärmesenke und Gehäuse bzw. festem Kurzschließerkontakt zu verbringen, wodurch die Lichtbogenspannung und die Strombegrenzung stark reduzierbar sind.

Durch die Ausführung der Funkenstrecken hinsichtlich Abstand der Elemente, des Materials und der Elektrodenflächen und die Vermeidung von gasabgebenden Stoffen beträgt die Lichtbogenspannung weniger als 50 V, wodurch nahezu keine Strombegrenzung durch den Lichtbogen erfolgt, wodurch das Opferelement 6 entsprechend seiner Kennlinie den Kurzschließer unverzögert auslöst.

Zur Lichtbogenführung können Nuten im Kontaktbereich zwischen der Wärmesenke 8 und dem Varistor 10 oder auch dem Gehäuseboden 3 ausgebildet werden. Alternativ oder zusätzlich sind Öffnungen durch die Wärmesenke 8 möglich, welche den Lichtbogen zur festen Kontaktelektrode 7 bzw. zu deren Unterseite lenken.

Die erfindungsgemäße Lösung hat den Vorteil, dass nur ein einziges federkrafterzeugendes Element erforderlich ist, was zur Deformation des Opferelements bei dessen Erwärmung führt. Diese Federanordnung betätigt den Kurzschließer zum Beherrschen hoher Kurzschluss- bzw. Dauerströme. Gleichzeitig wird der Varistor zur Vermeidung von Funkenbildung gut an den metallischen Bodenbereich des Gehäuses 3 gepresst.

Die Auslegung des Opferelements ermöglicht eine entsprechende Abstimmung auf unterschiedliche Impulsbelastungen und eine sehr flache Zeit-Strom-Kennlinie als Sicherung bei sehr hohen $I^2$t-Werten mit sehr geringer Dauerstromtragfähigkeit.

Der eingesetzte bewegliche koaxiale Gleitkontakt 30 ist unempfindlich gegen benachbarte Stromschleifen und ihre Kraftwirkung. Weiterhin ist dieser Gleitkontakt sehr impulstragfähig, induktivitätsarm und verschweißfrei. Gegenüber von flexiblen Leitern muss keine Materialdeformation für die Bewegung berücksichtigt werden. Die Kraftwirkung der zwangsweise vorhandenen Schleife bei derartigen bekannten Lösungen entfällt. Letztendlich ist die Kurzschließereinrichtung deutlich leistungsstärker auslegbar, als z.B. bei der Bewegung von verbleibenden Varistoranschlusselementen oder von üblichen Kurzschlussbügeln nebst Federvorspannung.

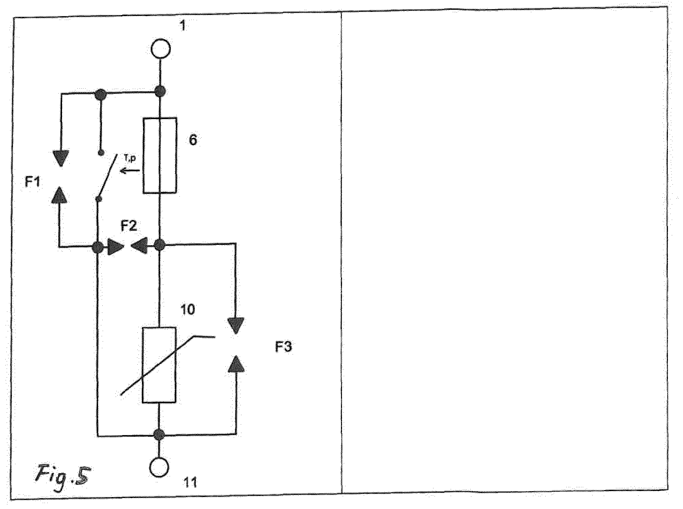

Die Fig. 5 zeigt ein vereinfachtes Ersatzschaltbild der erfindungsgemäßen Überspannungsschutzanordnung. Mit 1 und 11 sind die Hauptanschlüsse, mit 6 das Opferelement, mit 10 der Varistor bezeichnet. F1 entspricht der Funkenstrecke zwischen bewegter und fester Kontaktelektrode 5 und 7.

F2 stellt die Funkenstrecke zwischen Opferelement und fester Kurzschließerplatte im Bereich der Durchführung dar. F3 symbolisiert die Funkenstrecken zwischen der festen Kontaktelektrode 7 und der Wärmesenke 7; 8, Wärmesenke und Gehäusewand 8; 3 und der Gleitstrecke von der Wärmesenke zur Gehäusewandung.

Es besteht die Forderung, dass die Ansprechspannung F1 > F2 > F3 ist. Hierdurch ergibt sich der gewünschte erzwungene Stromfluss über das Opferelement bei allen Fehlerfällen mit bzw. ohne Lichtbogenbildung im Gehäuse. Die günstigste Auslegung gilt bei folgenden Ansprechspannungen:

$$F1 > F2 > F3 \quad (a)$$

$$F3\ (a) < F3\ (b) < F3\ (c),$$

wobei ein Lichtbogen bei allen Fehlerfällen nur an der Funkenstrecke F3 entstehen soll.

Die Funkenstrecke F3 (a) ist diejenige zwischen der festen Kurzschließerplatte und der Wärmesenke; die Funkenstrecke F3 (b) ist diejenige zwischen der Wärmesenke und der Gehäusewand und die Funkenstrecke F3 (c) ist diejenige der Gleitstrecke von der Wärmesenke zur entsprechenden Innenseite des Gehäuses.

**Patentansprüche**

1.  Überspannungsschutzanordnung mit Kurzschließereinrichtung, diese umfassend zwei gegenüberliegende Kontaktelektroden, die unter mechanischer Vorspannung stehend im Kurzschlussfall federkraftunterstützt eine Relativbewegung zueinander ausführen, wobei ein Opferelement (6) als Abstandshalter zwischen den Kontaktelektroden vorgesehen ist, welches thermisch- und/oder stromflussbedingt die Relativbewegung der Kontaktelektroden freigibt, einem metallischen Gehäuse (3), welches die Kontaktelektroden und das Opferelement (6) aufnimmt, sowie am Gehäuse (3) befindlichen oder durch das Gehäuse (3) geführten Anschlüssen (1; 11),
    **dadurch gekennzeichnet, dass**
    das Gehäuse (3) mindestens zweiteilig unter Bildung mindestens einer ersten (A; B) und einer zweiten (C) Kammer ausgebildet ist, wobei in der ersten Kammer (A; B) die bewegliche, federkraftunterstützte Kontaktelektrode (5) angeordnet ist und die Trennwand zwischen erster und zweiter Kammer die feste Kontaktelektrode (7) bildet, weiterhin in der zweiten Kammer ein Überspannungsableiter (10) angeordnet ist, der an seiner zur Trennwand gerichteten Seite eine Kontaktplatte (8) aufweist, wobei sich das Opferelement (6) zwischen dieser Kontaktplatte (8) und der beweglichen Kontaktelektrode (5) befindet und diesbezüglich die Trennwand einen an die Abmessungen des Opferelements (6) angepassten Durchbruch aufweist.

2.  Überspannungsschutzanordnung nach Anspruch 1,
    **dadurch gekennzeichnet, dass**
    der Überspannungsableiter (10) in der zweiten Kammer als Varistor oder eine Reihenschaltung aus Gasentladungsableiter (90) und Varistor ausgebildet ist.

3.  Überspannungsschutzanordnung nach Anspruch 1 oder 2,
    **dadurch gekennzeichnet, dass**
    in der ersten Kammer (A; B) eine Sicherung (100) integriert ist.

4.  Überspannungsschutzanordnung nach einem der vorangegangenen Ansprüche,
    **dadurch gekennzeichnet, dass**
    das Gehäuse (3) rotationssymmetrisch, insbesondere zylindrisch, wiederum insbesondere hohlzylindrisch ausgebildet ist.

5.  Überspannungsschutzanordnung nach einem der Ansprüche 2 bis 4,
    **dadurch gekennzeichnet, dass**
    der Varistor (10) als eine Anordnung von gestapelten Scheibenvaristoren ausgeführt ist.

6.  Überspannungsschutzanordnung nach einem der vorangegangenen Ansprüche,
    **dadurch gekennzeichnet, dass**
    der Kraftvektor der Feder (4) der beweglichen Kontaktelektrode (5) über das Opferelement (6) und die Kontaktplatte (8) auf den Überspannungsableiter (10) einwirkt und diesen an den diesbezüglichen Boden der zweiten Kammer (C) des Gehäuses (3) anpresst.

7.  Überspannungsschutzanordnung nach einem der vorangegangenen Ansprüche,
    **dadurch gekennzeichnet, dass**
    die Kontaktplatte (8) des Überspannungsableiters (10) eine Wärmesenke bildet und in einem definierten Abstand zur Unterseite der Trennwand befindlich ist, um hierdurch eine integrierte Funkenstrecke zu bilden.

8.  Überspannungsschutzanordnung nach einem der vorangegangenen Ansprüche,
    **dadurch gekennzeichnet, dass**
    zwischen der Kontaktplatte (8) des Überspannungsableiters (10) und der Trennwand ein Hilfskurzschließer vorgesehen ist.

9.  Überspannungsschutzanordnung nach Anspruch 8,
    **dadurch gekennzeichnet, dass**
    der Hilfskurzschließer als Bimetallschalter, Formgedächtnis-Legierungsschalter oder mit Lot fixierter, thermisch aktivierbarer Schalter ausgebildet ist.

10. Überspannungsschutzanordnung nach einem der vorangegangenen Ansprüche,
    **dadurch gekennzeichnet, dass**
    im Bereich des Durchbruchs für das Opferelement (6) eine Isolation ausgebildet ist.

11. Überspannungsschutzanordnung nach einem der Ansprüche 7 bis 10,
    **dadurch gekennzeichnet, dass**
    Mittel zur gezielten Führung eines im Durchlegierungsfall des Überspannungsableiters (10) auftretenden Lichtbogens zur Funkenstrecke hin vorgesehen sind.

**Claims**

1. An overvoltage protection assembly having a short-circuiting device comprising two opposing contact electrodes which, being under mechanical pre-load, execute in the short-circuit event a relative movement to one another under spring force assistance, wherein a sacrificial element (6) is provided as a spacer between the contact electrodes, which thermally and/or caused by a current flow releases the relative movement of the contact electrodes, a metallic housing (3) receiving the contact electrodes and the sacrificial element (3), as well as terminals (1; 11) located at the housing (3) or guided through the housing (3),
**characterized in that**
the housing (3) is formed to be at least two-part while forming at least one first (A; B) and one second (C) chamber, wherein the movable, spring force-assisted contact electrode (5) is arranged in the first chamber (A; B), and a partition wall between the first and second chamber forms the fixed contact electrode (7), furthermore an overvoltage arrester (10) is arranged in the second chamber, which exhibits a contact plate (8) at its side directed toward the partition wall, wherein the sacrificial element (6) is located between said contact plate (8) and the movable contact electrode (5), and the partition wall exhibits in this respect a breakthrough adapted to the dimensions of the sacrificial element (6).

2. The overvoltage protection assembly according to claim 1,
**characterized in that**
the overvoltage arrester (10) in the second chamber is formed as a varistor or a series connection of a gas discharge arrester (90) and a varistor.

3. The overvoltage protection assembly according to claim 1 or 2,
**characterized in that**
a fuse (100) is integrated in the first chamber (A; B).

4. The overvoltage protection assembly according to any one of the preceding claims,
**characterized in that**
the housing (3) is formed to be rotationally symmetrical, in particular cylindrical, again in particular hollow-cylindrical.

5. The overvoltage protection assembly according to any one of claims 2 to 4,
**characterized in that**
the varistor (10) is configured as an arrangement of stacked disk varistors.

6. The overvoltage protection assembly according to any one of the preceding claims,
**characterized in that**
via the sacrificial element (6) and the contact plate (8), the force vector of the spring (4) of the movable contact electrode (5) acts upon the overvoltage arrester (10) and presses same against the respective bottom of the second chamber (C) of the housing (3).

7. The overvoltage protection assembly according to any one of the preceding claims,
**characterized in that**
the contact plate (8) of the overvoltage arrester (10) forms a heat sink and is located at a defined distance from the underside of the partition wall in order to hereby form an integrated spark gap.

8. The overvoltage protection assembly according to any one of the preceding claims,
**characterized in that**
between the contact plate (8) of the overvoltage arrester (10) and the partition wall, an auxiliary short-circuiting device is provided.

9. The overvoltage protection assembly according to claim 8,
**characterized in that**
the short-circuiting device is formed as a bimetal switch, a shape memory alloy switch or a thermally activatable switch that is fixed by solder.

10. The overvoltage protection assembly according to any one of the preceding claims,
**characterized in that**
an isolation for the sacrificial element (6) is formed in the area of the breakthrough.

11. The overvoltage protection assembly according to any one of claims 7 to 10,
**characterized in that**
means for guiding an arc in a targeted manner toward the spark gap are provided, which arc occurs in the destruction event of the overvoltage arrester (10).

**Revendications**

1. Ensemble de protection contre des surtensions, comportant
un moyen court-circuiteur pourvu de deux électrodes de contact opposées qui, en cas de court-circuit, exécutent un mouvement relatif l'une par rapport à l'autre en étant sous précontrainte mécanique et en étant assistées par une force élastique, un élément sacrificiel (6) étant prévu à titre d'espaceur entre les électrodes de contact, qui libère le mouvement relatif des électrodes de contact dû à un effet thermique et/ou causé par la circulation du courant,
un boîtier métallique (3) qui reçoit les électrodes de contact et l'élément sacrificiel (6), et

des bornes (1 ; 11) situées sur le boîtier (3) ou menées à travers le boîtier (3),

**caractérisé en ce que**

le boîtier (3) est réalisé au moins en deux parties en formant au moins une première chambre (A ; B) et une seconde chambre (C), l'électrode de contact mobile (5) assistée par une force élastique étant agencée dans la première chambre (A ; B) et la cloison de séparation entre la première et la seconde chambre formant l'électrode de contact fixe (7), une dérivation de surtensions (10) est en outre agencée dans la seconde chambre, qui présente une plaque de contact (8) sur son côté dirigé vers la cloison de séparation,

l'élément sacrificiel (6) se situe entre ladite plaque de contact (8) et l'électrode de contact mobile (5), et la cloison de séparation présente en correspondance une traversée adaptée aux dimensions de l'élément sacrificiel (6).

2. Ensemble de protection contre des surtensions selon la revendication 1,

**caractérisé en ce que**

la dérivation de surtensions (10) dans la seconde chambre est réalisée sous la forme d'une varistance ou d'un circuit en série constitué d'une dérivation de décharge gazeuse (90) et d'une varistance.

3. Ensemble de protection contre des surtensions selon la revendication 1 ou 2,

**caractérisé en ce que**

un fusible (100) est intégré dans la première chambre (A ; B).

4. Ensemble de protection contre des surtensions selon l'une des revendications précédentes,

**caractérisé en ce que**

le boîtier (3) est réalisé à symétrie de révolution, en particulier sous forme cylindrique, particulièrement sous forme cylindrique creuse.

5. Ensemble de protection contre des surtensions selon l'une des revendications 2 à 4,

**caractérisé en ce que**

la varistance (10) est réalisée sous la forme d'un ensemble de varistances en disque empilées.

6. Ensemble de protection contre des surtensions selon l'une des revendications précédentes,

**caractérisé en ce que**

le vecteur de force du ressort (4) de l'électrode de contact mobile (5) agit sur la dérivation de surtensions (10) via l'élément sacrificiel (6) et via la plaque de contact (8), et il la pousse contre le fond correspondant de la seconde chambre (C) du boîtier (3).

7. Ensemble de protection contre des surtensions selon l'une des revendications précédentes,

**caractérisé en ce que**

la plaque de contact (8) de la dérivation de surtensions (10) constitue un puits de chaleur et se situe à une distance définie par rapport au côté inférieur de la cloison de séparation pour former ainsi un éclateur intégré.

8. Ensemble de protection contre des surtensions selon l'une des revendications précédentes,

**caractérisé en ce que**

un court-circuiteur auxiliaire est prévu entre la plaque de contact (8) de la dérivation de surtensions (10) et la cloison de séparation.

9. Ensemble de protection contre des surtensions selon la revendication 8,

**caractérisé en ce que**

le court-circuiteur est réalisé sous la forme d'un interrupteur à bilame, d'un interrupteur d'un alliage à mémoire de forme ou d'un interrupteur fixé par brasage et thermiquement activable.

10. Ensemble de protection contre des surtensions selon l'une des revendications précédentes,

**caractérisé en ce que**

une isolation est réalisée dans la zone de la traversée pour l'élément sacrificiel (6).

11. Ensemble de protection contre des surtensions selon l'une des revendications 7 à 10,

**caractérisé en ce que**

il est prévu des moyens destinés au guidage ciblé d'un arc électrique vers l'éclateur, qui apparaît en cas de percée de l'alliage de la dérivation de surtensions (10).

Fig. 1

Tig. 2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005048003 B4
- US 3813577 A
- DE 1018953 B

- EP 1116246 B1
- EP 1798742 B1